Europäisches Patentamt

European Patent Office

Office européen des brevets

(19)

(11) Publication number: **0 095 112**
**A1**

(12) **EUROPEAN PATENT APPLICATION**

(21) Application number: **83104762.6**

(22) Date of filing: **14.05.83**

(51) Int. Cl.³: **B 29 H 5/01**
**B 29 H 5/26**

(30) Priority: **26.05.82 IT 2149582**

(43) Date of publication of application:
**30.11.83 Bulletin 83/48**

(84) Designated Contracting States:
**AT BE CH DE FR GB LI LU NL SE**

(71) Applicant: **Deregibus, Alfio**
**Via Livorno, 12/B**
**Padova(IT)**

(72) Inventor: **Deregibus, Alfio**
**Via Livorno, 12/B**
**Padova(IT)**

(74) Representative: **Gervasi, Gemma et al,**
**Studio Brevetti e Marchi NOTARBARTOLO & GERVASI**
**33, Viale Bianca Maria**
**I-20122 Milano(IT)**

(54) **Vulcanisation process for rubber articles which are in contact with metal surfaces.**

(57) The heat required for vulcanising the mixture is pro-
duced by the Joule effect, by passing a current of suitable
intensity through the metal element for a determined time.

EP 0 095 112 A1

Croydon Printing Company Ltd.

- 1 -

VULCANISATION PROCESS FOR RUBBER ARTICLES WHICH ARE IN
CONTACT WITH METAL SURFACES.

This invention relates to a new vulcanisation process for
natural and/or synthetic rubber-based articles which may
be vulcanised in contact with metal surfaces.

Rubber articles are produced by the conversion industries
following a known cycle of operations of a general character,
which is valid for all types of mixture whether based on
natural or synthetic rubbers, the cycle comprising polymer
processing, mixing, possible moulding, and vulcanisation.

The vulcanisation operation is in all cases the final operation
which gives the mixture or already shaped article its required
physical and mechanical characteristics.

The radical transformation of the physical and mechanical
characteristics of elastomer-based mixtures attained by
vulcanisation is known to be the consequence of a chemical
conversion carried out in the mass, by which in the presence
of suitable vulcanising substances and under the action of
heat, the elastomer molecules form molecular bridges which
cross-link and thus fix the elastomer macromolecules,
preventing them from creeping. In most cases, vulcanisation
is carried out by heating the articles to a temperature of
between 70° and 210°C, where these articles are formed from
crude rubber mixtures containing sulphur or substances able to release sulphur in the active state during heating. Cross-linkage is attained in this case by the formation of sulphur bridges between the rubber macromolecules. Heating is carried out in an autoclave with direct pressurised steam or hot air.

If the pieces to be vulcanised are moulded, the vulcanisation stage can be carried out in the moulds themselves by heating them with steam, electricity or another heat source.

These vulcanisation processes are those of most widespread use, and cover about 95% of the production.

There are also other processes of extremely specific and limited use, such as vulcanisation in a molted salt bed, vulcanisation by microwaves and vulcanisation by infra-red rays, which are used for the remaining 5% of production.

A vulcanisation process has now been found, and forms the subject matter of the present invention, in which heating is based on a new concept. More specifically, the present invention relates to a process suitable for vulcanising articles which are formed in contact with metal parts which can be heated by the Joule effect. In this case, the temperature necessary to produce the required vulcanisation effect is attained by passing a suitable electric current through said metal parts for a determined time. The present invention also relates to thermoelectric systems which allow vulcanisation of rubber articles which are formed in contact with metal components, by thermal energy produced by passing a suitable electric current through said metal components.

The class of articles which fall within said definition and which can therefore be vulcanised by the new process is very vast.

General reference will be made hereinafter, for descriptive simplicity, to the case in which the heating element is the metal support core for a reinforced natural or synthetic crude rubber tube, but the description is valid for any metal conductor element, which is utilised as a heat source for inducing vulcanisation of the article and which is removed when vulcanisation is completed.

With reference to the case of metal support cores, it has been found that the metal support can vary both in terms of its geometry and dimensions. lt should preferably have an effective conducting cross-section of area varying between 60 and 1200 $mm^2$, while its length can reach 120 metres, and still give completely satisfactory results. These dimensions are indicative, but not critical.

Having established the core dimensions, which obviously depend on the dimensions and shape of the finished article, a determination is made of the current intensity. necessary to raise the core temperature to the required value between 140° and 210°C in a time variable between 5 seconds and 15 minutes. Having attained the predetermined temperature, the current passage must be such as to compensate for heat losses, and thus maintaining the temperature constant for the entire period.necessary for vulcanisation.

This period varies according to the nature of the mixture and the dimensions of the article. It depends particularly on its thickness, but generally lies between 10 minutes and 2 hours. If vulcanisation is carried out in an insulated container in which there is no heat loss, it is possible to pass current only during the initial stage until the article has reached the required temperature by the Joule effect, and then suspend any current passage. The temperature of the article remains unchanged for a time period sufficiently long to ensure completion of the vulcanisation process.

When vulcanisation is complete, the insulated container is opened, and the article is allowed to cool naturally.

If the article comprises an outer shaping and containing wrapping, as in the specific considered case of reinforced rubber tubes, it has been found advantageous to make this wrapping with a heat insulating material, such as cloth tape or mica tape. A more uniform temperature distribution throughout the entire article is obtained in this way, in addition to a drastic reduction in heat loss and thus a corresponding electricity saving.

Temperature control and consequent current regulation are advantageously carried out automatically, using suitable sensors.

The temperature can be measured in two ways:

a) by measuring the voltage and current, and then processing them in order to obtain the resistivity value,

b) by direct measurement with thermoprobes.

The first method requires a knowledge of resistivity as a function of the temperature for each material used, and a recalibration of the system whenever the cross-section and length of the metal support core varies (this recalibration can however be partly automated). The second method is carried out by inserting thermocouples or resistance thermometers in the support. This method is simpler and thus preferred.

The temperature of the support is considered equal to the temperature of the rubber. If the temperature is uniform along the entire support, this means that the heating element has uniform characteristics and thus ensures vulcanisation uniformity.

While it is apparent that optimum voltage, current intensity and power values and the manner in which the current varies with time must be determined case by case according to the particular characteristics of the material, dimensions, conductivity and insulation of the manufactured article, it has however been found from the many tests which have been carried out under the most diverse conditions that there are certain outline conditions which are always valid, namely:

- according to the control logic used, it is possible to operate with constant current during the entire heating process, or with constant voltage, allowing the second variable in the one or other case to be influenced by the variation in the electrical resistivity of the conductor material. In practice, it has been found slightly preferable to operate with constant current rather than with constant voltage;

- it is convenient to use materials having a low $\alpha$ value ($\alpha$ = temperature coefficient of resistivity for the heating elements. However, taking account also of the many other requirements of the heating element, such as no oxidation at the attained operating temperatures (up to 210°C), good resistance to any corrosive agents released by the rubber during vulcanisation, high electrical resistivity in order to attain high efficiency of the electrical supply system, a linear expansion coefficient which is as low as possible, good hot workability, and commercial availability at low cost, it has been found that best results are obtained with Ni-Cr steels and with martensitic steel, possibly alloyed with Cr;

- the voltage and current required to maintain the temperature are at most equal to 20-25% of the values of these quantities during the initial heating stage. The power used during the temperature-maintaining stage is therefore about 5% of that required during the heating stage;

- it is convenient to reduce the effective conducting cross-section of the heating elements to a minimum compatible with mechanical requirements. This limits the absorbed power to the maximum possible extent;

- energy consumption depends only to a minimum extent on the constituent material of the heating element;

- it is convenient to simultaneously heat two supports in series (one for the feed and one for the return of the current circuit), and several pairs of supports in parallel;

- the dimensions and composition of the heating elements must be as uniform as possible (in particular with regard to weld spots) to prevent any temperature differences between different supports, or between different sections of the same support, and to consequently avoid obtaining pieces with different vulcanisation characteristics and thus different mechanical characteristics.

A particularly important aspect of the thermoelectric equipment for carrying out the vulcanisation process according to the present invention is the electrical connections between the heating-vulcanising element and the current supply system. In this respect, it must be remembered that the current concerned is always several thousands of amps.

It has been found that the best manner of making such connections is to leave uncovered a sufficient portion of the end of the heating elements (reference being again made to the metal support cores for the reinforced rubber tubes for clarity) and connecting clamps to these portions, for example pneumatically controlled clamps, which in addition to providing sufficiently rapid connection and disconnection also ensure extremely reliable contact adaptable to the different cross-sections of the conductors.

The clamps are then connected to the electricity supply system preferably by flexible conductors which can absorb the inevitable elongation of the support during heating. The connections can also be made by rigid bars.  Either direct, alternating or pulsating voltage or current can be applied.

When vulcanisation is complete, the clamps are removed and the vulcanised pieces withdrawn from the metal support elements.  The ends of the heating elements must in no case comprise projections or raised portions because these would obstruct the withdrawal of the pieces.

The fundamental parameters of two vulcanisation operations are given hereinafter in order to illustrate the process and apparatus of the present invention by way of example only.

EXAMPLE   1

Natural rubber tubes were vulcanised, formed on a martensitic steel core of inner diameter 19 mm and outer diameter 27 mm. The tubes had the following composition:
- rubber..................................................... 65%
- fabric..................................................... 25%
- metal spirals.............................................. 10%

The tube had an outer wrapping of nylon with 100 mm of rock wool insulation.

Eight supported tubes of length 30 m were prepared, and connected in series  to give a total of 240 m.

The end connections were then made by pneumatic clamps which were connected by flexible conductors to the direct current supply system.

This current was regulated, on the basis of the provided data, by temperature probes suitably applied along the supports, such that the temperature of the supports increased approximately linearly from ambient temperature to 170°C in a time of about 15 minutes. After this stage, the current was suitably reduced so as to keep the support temperature approximately constant for a further 15 minutes (i.e. for the time necessary to correctly complete vulcanisation).

When vulcanisation was complete, the tubes were allowed to cool, the clamps removed and the finished tubes withdrawn from the cores after unwrapping the insulating tape.

The electricity consumption was about 32 Kwh (27,650 Kcal).

When the same pieces were vulcanised by steam in an autoclave, the vulcanisation required the following quantities:
- maximum temperature.................................... 150°C
- vulcanisation temperature............................ 150°C
- time................................................... 90 minutes
- energy consumption................................. 187,500 Kcal

- - -

Based on the numerous vulcanisation tests carried out on the most diverse articles, it has been ascertained that the new vulcanisation process and apparatus have the following main advantages over the vulcanisation process which is the most widely used and the most economically convenient at the present time, namely vulcanisation in an autoclave using pressurised steam:

- there is a much lower energy consumption. This is due in particular to the fact that the electrothermal  system according to the present invention does not have high energy losses, as occur in the case of a steam system. It has been found that as a general rule, a new electrothermal system operates at an overall efficiency of greater than or equal to 0.70, whereas an equivalent steam system normally has an overall efficiency of 0.20;

- the vulcanisation process can be carried out in a much
. shorter time because high temperatures can be reached
in a very limited time, without this substantially redu
cing the economical convenience of the process;

- the facility for refined control offered by an electro-t
thermal system can allow complete automation of the
vulcanisation process, and enable the most suitable tempe
rature variation with time to be obtained in order to
optimise the characteristics of the article;

- in the case of vulcanised pieces made from sheet rubber
on a metal core, the new process provides a level of
continuity and uniformity of the layer in contact with
the support which has never been able to be obtained
with known vulcanisation processes.   Using such processes
it is impossible to prevent a number of discontinuities
in the inner surface wich could represent a like number
of points of infiltration for the conveyed fluids and
points of weakness for the articles.   In a great many
applications in which the risk of discontinuity in the
inner layer is absolutely unacceptable, it has been necessary
up to the present time to produce said layer by extrusion,
this being a process considerably more costly than production by winding, and almost never usable for the
production  of large diameter tubes.   In all cases,
pieces prepared by vulcanisation on a metal support core
using the electrothermal effect show more complete and
uniform chemicophysical characteristics at all points
than ever obtained up to the present time;

-  the new process enables articles to be produced which
would be difficult to produce by known vulcanisation
processes, in particular by steam vulcanisation.  This
is the case for example of tubes for submerged pumps, wh
which have to be produced with a wall thickness which
is as small as possible.   At the present time, the minimum wall thickness which can be obtained is 2 mm. This is because with known methods it is no possible to vulcanise tubes having a wall thickness less than 2 mm, whereas with the new electrothermal method which allows extremely precise time and temperautre adjustment, there are no practical limits to the dimensions of the article to be produced, either in terms of minimum or maximum thickness.

0095112

PATENT CLAIMS

1. A vulcanisation process for rubber-based articles, characterised in that the thermal energy required for vulcanising the rubber is supplied by heating by means of the Joule effect, metal parts in contact with the articles removed when vulcanisation is ultimate.

2. A process as claimed in claim 1, wherein the metal parts are heated by the Joule effect to a temperature of 70°-210°C for a time of between 10 minutes and 2 hours.

4. A process as claimed in claim 1, wherein the metal parts are raised by the Joule effect to the maximum vulcanisation temperature in a time of between 5 seconds and 30 minutes.

5. A process as claimed in claim 1, wherein direct, alternating or pulsating voltages and thus currents are applied for heating the metal parts.

6. An electrothermal apparatus for vulcanising rubber articles, characterised by comprising metal current conductor parts supporting the article or in any case in contact with it and with the parts arranged to establish secure electric contact between the metal conductor parts and the current supply apparatus.

7. An electrothermal apparatus as claimed in claim 6, wherein the contact parts are connected to the current supply apparatus by flexible conductors or rigid bars.

8. An alectrothermal apparatus as claimed in claim 6, wherein the contact parts are servo-controlled.

## European Patent Office

## EUROPEAN SEARCH REPORT

# DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | FR-A-2 248 147 (DUNLOP)<br>* Page 1, line 33 - page 2, line 24; page 4, line 3 - page 5, line 10 * | 1-7 | B 29 H 5/01<br>B 29 H 5/26 |
| X | US-A-3 922 415 (W.L. DEXIER)<br>* Column 1, line 42 - column 2, line 2; column 3, lines 42-58; column 5, line 3 - column 6, line 4 * | 1,6,7 | |
| X | DE-C- 967 148 (SIEMENS-SCHUCKERTWERKE)<br>* Whole document * | 1 | |

TECHNICAL FIELDS SEARCHED (Int. Cl. ³)

B 29 H

The present search report has been drawn up for all claims

| Place of search THE HAGUE | Date of completion of the search 25-08-1983 | Examiner FRIDEN N. |
|---|---|---|